# EUROPEAN PATENT SPECIFICATION

(11) **EP 0 869 194 B1**
(45) Date of publication and mention of the grant of the patent: **25.02.2004**
(21) Application number: 98660021.1
(22) Date of filing: 20.03.1998
(51) Int. Cl.: C22B 34/12, C01G 23/053

(54) **Process for preparing titanium dioxide**
Verfahren zur Herstellung von Titandioxid
Procédé de préparation du bioxyde de titane

(30) Priority: 03.04.1997 FI 971370
(43) Date of publication of application: 07.10.1998
(73) Proprietor: Kemira Pigments Oy, 28840 Pori (FI)
(72) Inventor: Vartiainen, Jaana Liisa, 28500 Pori (FI)
(74) Representative: Svensson, Johan Henrik

(56) References cited:
- DE-A- 2 038 245
- FR-A- 2 128 309
- FR-A- 2 259 058
- GB-A- 498 324

## Description

The invention relates to a process for preparing titanium dioxide by the sulfate process from a titaniferous feedstock which contains trivalent iron. The invention also relates to a process for preparing a solid sulfate cake usable in the preparation of titanium dioxide.

TiO₂ pigments are prepared by two processes: the sulfate process based on sulfuric acid and the chloride process.

In the sulfate process, a titaniferous feedstock, usually ilmenite (FeTiO₃) and/or a titaniferous slag which contains iron, is reacted with sulfuric acid, whereupon there forms a solid, watersoluble reaction cake, so-called sulfate cake, which consists mainly of titanyl sulfate (TiOSO₄) and ferrous sulfate (FeSO₄), and this cake is thereafter leached in a mixture of water and acid solutions recycled from subsequent steps of the preparation process. The process solution (so-called black liquor) thus obtained is treated with a reducing material, such as scrap iron, in order to reduce the trivalent iron derived from the titaniferous feedstock to bivalent iron. The reduction is followed by settling, from which the solution is fed to a crystallization step, in which the iron is crystallized as ferrous sulfate heptahydrate, which is removed from the solution. Thereafter the solution is concentrated and hydrolyzed in order to convert the titanyl sulfate to titanium dioxide hydrate. The precipitated titanium dioxide hydrate is separated from the solution and is calcined to titanium dioxide. Finally the calcined product is after-treated in suitable grinding, washing and drying steps to produce a finely-divided titanium dioxide pigment.

The titanium dioxide preparation process selected sets certain requirements on the titaniferous feedstock; in the sulfate process described above, the most important of these requirements is reactivity with sulfuric acid.

According to the publication Mining Engineering, vol 46, December 1994, K.J. Stanaway, "Overview of titanium dioxide feedstocks," pp. 1367-1370, the commercially available TiO₂ pigment feedstocks can be classified as follows on the basis of their titanium content:

| **Feedstock** | **TiO**_{**2**} **content** |
|---|---|
| Natural rutile | 95% |
| Leucoxenized ilmenites | 55-65% |
| Ilmenites | 37-54% |
| Synthetic rutile | 89-93 |
| Titaniferrous slags | 75-85% |

Synthetic rutile and titaniferrous slags are intermediate products, concentrated with respect to titanium and 'prepared from ilmenite.

Since in feedstocks having a high TiO₂ concentration, a significant proportion of the titanium is in a form which reacts weakly with sulfuric acid, of the natural concentrates only ilmenite (TiO₂ = 35-54%) and of the pretreated feedstocks titaniferrous slag are suitable sources of titanium for the sulfate process.

Commercial ilmenite concentrates always contain, alongside titanium, also a considerable amount of iron, >30%. The proportion of trivalent iron of the total iron varies, depending on the type of concentrate, from 20% up to 45%. Since the preparation of a pure TiO₂ pigment from a sulfuric acid based solution does not permit the presence of trivalent iron, in the sulfate process described above the iron is reduced in a solution state to bivalent iron by means of scrap iron. Performed in this manner, the reduction increases the iron load in the process substantially. The proportion of scrap iron used for the reduction may be more than 20% of the total iron load in the sulfate process. Owing to the high iron load in the process, the amounts of byproducts and waste produced annually by pigment factories using ilmenite as their feedstock are quite high. In recent years, attention has been focussed increasingly on environmental protection, which has brought to the fore the technological and economic significance of the said fact. In particular, the high amounts of byproducts and waste are indeed seen as a threat to the future of the sulfate process.

In addition to the use of iron significantly increasing the iron load in the process, the present-day sulfate process has a disadvantage in the precise temperature control of reduction which it requires and which is indispensable in order that the titanyl sulfate should not become prematurely hydrolyzed to titanium dioxide. The presentday reduction in a solution state also means a considerably long retention time of the titanium in solution, which often weakens the quality of the process solution (so-called black liquor). As the retention time lengthens, the risk of uncontrolled precipitation of titanium dioxide increases and process control becomes more difficult.

Efforts have been made previously to decrease the iron load in the sulfate process, for example, by developing pyrometallurgical processes (QIT, RBM) for the preparation of titaniferrous slags, in which processes a major proportion of the iron of the ilmenite is removed in a metallic form by melt reduction. The reactivity with sulfuric acid of the feedstock thus pretreated, so-called titaniferrous slag, is, however, clearly weaker than that of ilmenite concentrates; in practice this means, for example, the use of a stronger sulfuric acid and a larger amount of sulfuric acid in the sulfating reaction and complication of the acid recycling possibilities within the factory. Although the iron load of the sulfate process can be substantially decreased by using so-called titaniferrous slags, their use involves, owing for example to the factors mentioned above, effects disadvantageous for the environment and the production economics, such as a higher need for evaporation and neutralization (increased energy consumption; the neutralization of dilute acids leads to considerable amounts of gypsum produced).

The specification in publication WO-94/26944 contains a mention of a process in which ilmenite is reduced thermally by using solid carbon in a rotary kiln, followed by a leaching of the cooled reduced product in sulfuric acid or hydrochloric acid. The leaching with sulfuric acid is carried out under high pressure, which indicates that the reactivity of the feedstock with sulfuric acid is relatively weak. Furthermore, the leaching with sulfuric acid is carried out in the presence of nuclei. The reference to the use of nuclei in the hydrolysis of leached titanium most likely means the elimination of titanium losses, in which case the proportion of soluble titanium in the concentrate is quite low. According to the said publication, a commonly used method for improving the quality of ilmenite is the smelting of the ilmenite in an electric kiln in the presence of coke in order to form a titaniferous slag. The said publication emphasizes that thermally reduced titaniferous materials are not effective considering the acid leaching step, and the invention described in the said publication is based on performing a separate heat treatment on the thermally reduced titaniferous material in order to bring the material into a more readily soluble form. The said heat treatment is preferably an oxidizing treatment or one which does not cause a change in the state of oxidation.

FR-A-2259058 (GB-1485589) discloses a process for the production of synthetic rutile containing from 90 to 98% of TiO₂ from ilmenite. This document specifically discloses a process wherein ilmenite is subjected to reduction to reduce iron(III) present in the ore into iron (II), and subsequently the resulting ore is selectively leached with a diluted acid to remove the iron(II) and iron(III) and the residue is calcined to form synthetic rutile.

FR-A-2128309 (GB-1312765) discloses a process for the production of a material having a high content of TiO₂ from ilmenite. This document specifically discloses a process wherein ilmenite is heated under oxidising conditions, the oxidised material is heated under reducing conditions until the iron. content is substantially wholly in the ferrous state, the reduced material is leached with diluted sulfuric acid, and finally the leached material is recovered and heated to obtain a material having a TiO₂ content from about 70 to 80%. The produced material is suitable for the production of pigmentary titanium dioxide by the sulfate process.

GB-A-498324 discloses a process for the treatment of an iron ore containing titanium by decomposing this raw material with a sulfuric acid saturated with ferrous sulfate. Said sulfuric acid saturated with ferrous-sulfate is used in excess and at least in double the quantity theoretically calculated for the conversion of the ferrous and ferric oxide, aluminium oxide and titanium dioxide content of the ore into sulfates. Concentrated sulfuric acid is added to the thus obtained sulfuric acid solution, and subsequently the acid solution is cooled to precipitate ferrous sulfate, and finally meta-titanic acid is separated from the solution.

The primary object of the state-of-the-art pretreatment methods is to increase the titanium content in the feedstock, which > means breaking up the mineralogical structure of the concentrate so that the reactivity of the titanium with sulfuric acid is substantially weakened.

The object of the invention is to provide a process for preparing titanium dioxide, by means of which the disadvantages of prior known processes are avoided and the amount of ferric iron in the titaniferous feedstock can be minimized without the reactivity of the feedstock with sulfuric acid being lowered.

These objects can be achieved by processes according to the invention, the principal characteristics of the processes being evident from the accompanying claims.

According to the invention, there is thus provided a process for the preparation of a solid sulfate cake usable in the preparation of titanium dioxide, characterized in that a titaniferous feedstock which contains trivalent iron is reduced thermally in a solid state at a temperature in the range of 700-1000°C, the treatment time at the reduction temperature being from 20 min to 1h, by means of a reducing gas comprising carbon monoxide so that during the reduction the CO/CO₂ ratio in the gas atmosphere is above 0.5, the trivalent iron being reduced to bivalent iron without the formation of metallic iron, whereby a reduced titaniferous material having a low ferric iron content is obtained, and wherein the heating and cooling of the titaniferous feedstock take place in a reducing atmosphere and the reduced titaniferous material is reacted with sulfuric acid to form a solid sulfate cake.

According to the invention there is also provided a process for preparing titanium dioxide by the sulfate process from a titaniferous feedstock which contains trivalent iron, the process comprising the following steps:
a) the titaniferous material is reacted with sulfuric acid to form a solid sulfate cake;
b) the said sulfate cake is leached to form a process solution;
c) titanium dioxide hydrate is precipitated out from the process solution; and
d) the titanium dioxide hydrate is treated further to form titanium dioxide, the process being characterized in that the process comprises a step which is carried out before step a) and in which a titaniferous feedstock which contains trivalent iron is reduced thermally in a solid state at a temperature in the range of 700-1000°C, the treatment time at the reduction temperature being from 20 min to 1h, by means of a reducing gas comprising carbon monoxide so that during the reduction the CO/CO₂ ratio in the gas atmosphere is above 0.5, the trivalent iron being reduced to bivalent iron without the formation of metallic iron, whereby a reduced titaniferous material having a low ferric iron content is obtained, and wherein the heating and cooling of the titaniferous feedstock take place in a reducing atmosphere. The titaniferous feedstock which contains trivalent iron is preferably ilmenite, in particular an ilmenite concentrate.

Since the object of the process now developed is only to minimize the amount of ferric iron in the concentrate and not to increase the concentration of titanium, the thermal reduction can be performed in a controlled manner so that the reactivity of the ilmenite concentrate with sulfuric acid is retained. It has been observed, surprisingly, that the thermal reduction carried out in accordance with the invention even improves the reactivity of the ilmenite concentrate with sulfuric acid, in which case it is possible in the sulfating step to use a more dilute sulfuric acid than in a case in which an unreduced ilmenite concentrate is used.

The thermal reduction according to the invention is carried out in conditions in which ferric iron is reduced maximally to the ferrous form without the formation of metallic iron.

The reduction temperature depends on the feedstock used and is within a range of 700-1000°C. The treatment time at the reduction temperature is 20 min-1h.

The thermal reduction according to the invention is a solid-state reduction, which can be implemented in, for example, a rotary kiln operating according to the countercurrent principle, or in a fluidized bed.

Both the energy and the carbon monoxide containing reduction gas, required by the reduction process, can be obtained, for example, by burning a carbon- and/or hydrogen-containing fuel in air-starved conditions. The fuel used may, for example, consist of gaseous hydrocarbons such as propane, butane or natural gas, or liquid hydrocarbons such as oil, or solid fossil fuels such as coal or peat.

It is also possible to use as the source of energy and as the reduction gas a separately prepared reducing gas mixture, such as a mixture of CO and CO₂.

In the reduction, the CO/CO₂ ratio in the gas atmosphere is above 0.5, and preferably above 0.8.

The treatment conditions should be selected so that simultaneously both the trivalent iron is reduced and the precipitation and rutilization of TiO₂ is as little as possible.

The prevailing reduction mechanism depends on how the trivalent iron is chemically bound in the concentrate. In fresh ilmenites, in which the ferric iron is present mainly in the form of separate hematite precipitations, what is in question is the reduction of Fe₂O₃ to FeO. In partly disintegrated ilmenites, on the other hand, most of the trivalent iron is bound in so-called pseudorutile, Fe₂Ti₃O₉, which breaks down to ilmenite, FeTiO₃, and titanium dioxide, TiO₂.

### Reduction reactions:

| | |
|---|---|
| fresh ilmenite | Fe₂O₃ + CO = 2 FeO + CO₂ |
| disintegrated ilmenite | Fe₂Ti₃O₉ + CO = 2 FeTiO₃ + TiO₂ + CO₂ |

As was pointed out above, the treatment temperature depends on the concentrate and is within a range of 700-1000°C, and within the reduction range the CO/CO₂ ratio in the gas phase is preferably >0.8.

In order that the breaking down of the ilmenite or pseudorutile structures to hematite and TiO₂ should not occur during the thermal treatment, not only the reduction but also both the heating and the cooling of the concentrate must take place in a reducing atmosphere. In an inert or mildly oxidizing atmosphere, pseudorutile breaks down already at relatively low temperatures, approx. 450°C, to pseudobrookite (Fe₂TiO₅) at the same time causing a large amount of TiO₂ to precipitate. In order to avoid this, the heating in particular of concentrates which contain a large amount of pseudorutile (those disintegrated to a high degree) must be carried out under clearly reducing conditions. According to experience, the CO/CO₂ ratio in the output gas must be above 0.5.

The reactivity with sulphuric acid of the TiO₂ possibly formed as a separate phase during the thermal treatment is affected by both the crystal size (precipitation size) and the degree of rutilization. Since the crystal size and the degree of rutilization increase both when the temperature is increased and when the treatment time is lengthened, the entire thermal treatment (heating, reduction and product cooling) must be carried out at a temperature as low as possible and with a short retention time. When ilmenite concentrates are treated in accordance with the principles described above, the iron load in the sulfate process can be decreased substantially and the reactivity of the concentrates with sulfuric acid can even be improved.

The improvement of reactivity is based on the following factors:
1. Pseudorutile (Fe₂Ti₃O₉), less reactive with sulfuric acid, forms, when being reduced, clearly more reactive ilmenite (FeTiO₃). (When the TiO₂ content of the compound increases, reactivity with sulfuric acid weakens.)
2. If the treatment time is sufficiently short, the TiO₂ formed in the reduction reactions does not have time to precipitate as a separate phase but remains in the ilmenite lattice or in an uncrystallized glassy state, which reacts with sulfuric acid clearly better than does rutile.
3. Drastic changes of temperature and phase during the treatment cause intraparticular porosity, which significantly increases the reaction surface.

The invention is described below in greater detail with the help of examples. Unless otherwise indicated, the percentages are based on weight.

### Examples

In Examples 1 and 2, ilmenites were used the titanium dioxide and iron contents of which were as follows:

| | **A** | **B** |
|---|---|---|
| TiO₂ | 54.0% | 44.5% |
| Fe (total) | 29.4% | 34.5% |
| Fe²⁺ | 16.1% | 26.3% |
| Fe³⁺ | 13.1% | 8.2% |

### Example 1

500 g of ilmenite A was batched into a 5-liter quartz reactor equipped with a rotator, whereafter the reactor was closed gas-tightly with a furnace head equipped with connections for gas feed and gas outlet. At the batching stage the air left inside the reactor was displaced with N₂, which was fed for 10 minutes at a flow rate of 8 l/min. Thereafter the N₂ flow was replaced with a CO/CO₂ gas mixture, which acted as the reducing gas. The composition of the gas mixture was 50% by volume CO and 50% by volume CO₂. During the reduction the flow rate of the gas was 8 l/min. After the batching and the replacement of the atmosphere, the reactor, together with the batch, rotating at a velocity of approx. 1 r/min, was pushed into a chamber furnace heated to 700°C. The temperature of the furnace was further raised to 800°C, at which the reactor was rotated for 1 hour. The necessary treatment time at the reduction temperatures was approx. 20 min. After the reducing treatment, the reactor was drawn out of the chamber furnace to room temperature and was allowed to cool to 50°C in the reducing gas atmosphere before being opened. After the treatment, Fe³⁺ = 0.1% was determined from the ilmenite concentrate. The degree of reduction of the trivalent iron was above 99%. According to a structural analysis, the sample did not contain metallic iron.

200 g of the reduced ilmenite concentrate was reacted with sulfuric acid, and the proportion of reacted titanium was determined from the solid sulfate cake. The same ilmenite, unreduced, and the sulfuric acid concentration previously optimized for it, was used in the reference reaction.

| | Unreduced concentrate | Reduced concentrate |
|---|---|---|
| Sulfuric acid | 87.1% | 80.1% |
| concentration | | |
| | | |
| Reacted TiO₂ | 89.7% | 89.6% |

By using the reduced concentrate, the same yield level was achieved with a considerably lower sulfuric acid concentration.

### Example 2

500 grams of concentrate B was reduced otherwise in accordance with Example 1, but by using a reduction temperature of 1000 °C. The required treatment time at the reduction temperature was approx. 30 min. After the treatment, Fe³⁺ = 1.1% was determined from the ilmenite concentrate. The degree of reduction of the trivalent iron was above 86%. 200 grams of the reduced ilmenite concentrate was reacted with sulfuric acid, and the proportion of reacted titanium was determined from the formed solid sulfate cake. The same ilmenite, unreduced, and the sulfuric acid concentration previously optimized for it, was used in the reference reaction.

| | Unreduced concentrate | Reduced concentrate |
|---|---|---|
| Sulfuric acid | 82.4% | 78.2% |
| concentration | | |
| | | |
| Reacted TiO₂ | 92.9% | 95.1% |

By using the reduced concentrate, a higher yield level was achieved with a considerably lower sulfuric acid concentration.

### Example 3

An ilmenite concentrate having the following concentrations:

| | |
|---|---|
| TiO₂ | 53.5% |
| Fe (total) | 30.4% |
| Fe²⁺ | 16.2% |
| Fe³⁺ | 13.6% |

was reduced at a rate of 500 kg an hour in a continuous-working pilot-scale (length 11 m, diameter 1.4 m) rotary kiln operating according to the countercurrent principle. The energy and reduction gas required by the process were obtained by burning butane in air-starved conditions at one end of the kiln. The total coefficient of air fed into the kiln was 0.7. Cold concentrate was fed into the kiln from the gas outlet end, where it was heated by the hot gas to a reduction temperature of approx. 820°C. The average retention time of the concentrate in the kiln was approx. 1 hour. This retention time includes both the heating and the reduction of the concentrate. In this case the retention time of the concentrate in the reduction zone was approx. 40 minutes. The hot concentrate, at above 800°C, leaving the kiln was cooled indirectly with water by using a cooling screw. After the treatment, more than 90% of the trivalent iron of the concentrate had been reduced.

A sample was taken from the reduced concentrate, and it was reacted in a laboratory with sulfuric acid in accordance with Examples 1 and 2. The degree of reaction of TiO₂ with sulfuric acid having a concentration of 78.2% was 90.1%.

## Claims

1. A process for preparing a solid sulfate cake usable in the preparation of titanium dioxide, **characterized in that** a titaniferous feedstock which contains trivalent iron is reduced thermally in a solid state at a temperature in the range of 700-1000°C, the treatment time at the reduction temperature being from 20 min to 1 h, by means of a reducing gas comprising carbon monoxide so that during the reduction the CO/CO₂ ratio in the gas atmosphere is above 0.5, the trivalent iron being reduced to bivalent iron without the formation of metallic iron, whereby a reduced titaniferous material having a low ferric iron content is obtained, and wherein the heating and cooling of the titaniferous feedstock take place in a reducing atmosphere, and the reduced titaniferous material is reacted with sulfuric acid to form a solid sulfate cake.

2. A process according to Claim 1, **characterized in that** the titaniferous feedstock which contains trivalent iron is ilmenite.

3. A process according to Claim 1 or 2, **characterized in that** the energy and reducing gas required by the reduction process are obtained by burning a carbon- and/or hydrogen-containing fuel in air-starved conditions.

4. A process according to Claim 3, **characterized in that** the fuel used consists of gaseous or liquid hydrocarbons, such as propane, butane, natural gas or oil, or of solid fossil fuels such as coal or peat.

5. A process according to Claim 1 or 2, **characterized in that** the source of energy and reducing gas used in the reduction process is a separately prepared reducing gas mixture, such as a mixture of CO and CO₂.

6. A process according to any of the above claims, **characterized in that** the reduction is carried out in a rotary kiln or in a fluidized bed.

7. A process for preparing titanium dioxide by the sulfate process from a titaniferous feedstock which contains trivalent iron, the process comprising the following steps:
a) titaniferous material is reacted with sulfuric acid in order to form a solid sulfate cake,
b) the said sulfate cake is leached to form a process solution,
c) titanium dioxide hydrate is precipitated out from the process solution, and
d) the titanium dioxide hydrate is treated further to form titanium dioxide,
**characterized in that** the process comprises a step which is carried out before step a) and in which a titaniferous feedstock which contains trivalent iron is reduced thermally in a solid state at a temperature in the range of 700-1000°C, the treatment time at the reduction temperature being from 20 min to 1 h, by means of a reducing gas comprising carbon monoxide so that during the reduction the CO/CO₂ ratio in the gas atmosphere is above 0.5, the trivalent iron being reduced to bivalent iron without the formation of metallic iron, whereby a reduced titaniferous material having a low ferric iron content is obtained, and wherein the heating and cooling of the titaniferous feedstock take place in a reducing atmosphere.

8. A process according to Claim 7, **characterized in that** the titaniferous feedstock which contains trivalent iron is ilmenite.

9. A process according to Claim 7 or 8, **characterized in that** the energy and reducing gas required by the reduction process are obtained by burning a carbon- and/or hydrogen-containing fuel in air-starved conditions.

10. A process according to Claim 9, **characterized in that** the fuel used consists of gaseous or liquid hydrocarbons such as propane, butane, natural gas or oil, or of solid fossil fuels such as coal or peat.

11. A process according to Claim 7 or 8, **characterized in that** the energy source and reducing gas used in the reduction process is a separately prepared reducing gas mixture, such as a mixture of CO and CO₂.

12. A process according to any of Claims 7-11, **characterized in that** the reduction is carried out in a rotary kiln or a fluidized bed.

## Patentansprüche

1. Verfahren zur Herstellung eines festen Sulfatkuchens, der bei der Herstellung von Titandioxid verwendbar ist, **dadurch gekennzeichnet, dass** ein titanhaltiges Einsatzprodukt, welches dreiwertiges Eisen enthält, im festen Zustand in einem Temperaturbereich von 700 bis 1.000 °C thermisch reduziert wird, wobei die Behandlungszeit bei der Reduktionstemperatur zwischen 20 Minuten und 1 Stunde liegt, mittels eines reduzierenden Gases, das Kohlenmonoxid enthält, so, dass während der Reduktion das CO/CO₂-Verhältnis in der Gasatmosphäre über 0,5 liegt, wobei das dreiwertige Eisen zum zweiwertigen Eisen ohne die Bildung metallischen Eisens reduziert wird und ein reduziertes titanhaltiges Material mit einem geringen Eisen(III)-Gehalt erhalten wird und wobei das Aufwärmen und Abkühlen des titanhaltigen Einsatzproduktes in einer reduzierenden Atmosphäre stattfindet, und das reduzierte titanhaltige Material mit Schwefelsäure zur Reaktion gebracht wird, um einen festen Sulfatkuchen zu erhalten.

2. Verfahren nach Anspruch 1, **dadurch gekennzeichnet, dass** das titanhaltige Einsatzprodukt, welches dreiwertiges Eisen enthält, Ilmenit ist.

3. Verfahren nach Anspruch 1 oder 2, **dadurch gekennzeichnet, dass** die Energie und das reduzierende Gas, das durch den Reduktionsprozess erfordert wird, durch Verbrennen eines kohlenstoff- und/oder wasserstoffhaltigen Brennstoffs in luftarmen Bedingungen erhalten wird.

4. Verfahren nach Anspruch 3, **dadurch gekennzeichnet, dass** das eingesetzte Brennmaterial aus gasförmigen oder flüssigen Kohlenwasserstoffen besteht, wie Propan, Butan, Erdgas oder Öl, oder ein fester fossiler Brennstoff wie Kohle oder Torf ist.

5. Verfahren nach Anspruch 1 oder 2, **dadurch gekennzeichnet, dass** die Quelle für Energie und das reduzierende Gas, das beim Reduktionsprozess eingesetzt wird, eine getrennt hergestellte Mischung eines reduzierenden Gases ist, wie ein Gemisch von CO und CO₂.

6. Verfahren nach einem der vorangehenden Ansprüche, **dadurch gekennzeichnet, dass** die Reduktion in einem Rotationsofen oder in einem Fließbett durchgeführt wird.

7. Verfahren zur Herstellung von Titandioxid durch den Sulfatprozess aus einem titanhaltigen Einsatzprodukt, welches dreiwertiges Eisen enthält, wobei das Verfahren folgende Schritte umfasst:
a) titanhaltiges Material wird mit Schwefelsäure zur Reaktion gebracht, um einen festen Sulfatkuchen zu bilden,
b) der genannte Sulfatkuchen wird ausgelaugt, um eine Prozesslösung zu bilden,
c) Titandioxidhydrat wird ausgefällt aus der Prozesslösung und
d) das Titandioxidhydrat wird weiter zur Bildung von Titandioxid behandelt,
**dadurch gekennzeichnet, dass** das Verfahren einen Schritt umfasst, welcher vor dem Schritt a) durchgeführt wird und in dem ein titanhaltiges Einsatzprodukt, welches dreiwertiges Eisen enthält, thermisch im festen Zustand bei einer Temperatur im Bereich von 700 bis 1.000 °C reduziert wird, wobei die Behandlungszeit bei der Reduktionstemperatur zwischen 20 Minuten und 1 Stunde liegt, mittels eines reduzierenden Gases, das Kohlenmonoxid enthält, so dass während der Reduktion das CO/CO₂-Verhältnis in der Gasatmosphäre über 0,5 liegt, wobei das dreiwertige Eisen zu zweiwertigem reduziert wird ohne die Bildung metallischen Eisens und ein reduziertes titanhaltiges Material mit einem geringen Eisen(III)-Gehalt erhalten wird, und wobei das Erwärmen und das Abkühlen des titanhaltigen Einsatzproduktes in einer reduzierenden Atmosphäre statt findet.

8. Verfahren nach Anspruch 7, **dadurch gekennzeichnet, dass** das titanhaltige Einsatzprodukt, welches dreiwertiges Eisen enthält, Ilmenit ist.

9. Verfahren nach Anspruch 7 oder 8, **dadurch gekennzeichnet, dass** die Energie und das durch den Reduktionsprozess erforderte reduzierende Gas erhalten wird durch Verbrennung eines kohlenstoff- und/oder eines wasserstoffhaltigen Brennstoffs unter luftarmen Bedingungen.

10. Verfahren nach Anspruch 9, **dadurch gekennzeichnet, dass** der eingesetzte Brennstoff aus gasförmigen oder flüssigen Kohlenwasserstoffen wie Propan, Butan, Erdgas oder Öl, oder einem festen fossilen Brennstoff wie Kohle oder Pech besteht.

11. Verfahren nach Anspruch 7 oder 8, **dadurch gekennzeichnet, dass** die Energiequelle und das in dem Reduktionsprozess verwendete reduzierende Gas ein getrennt hergestelltes Reduktionsgasgemisch ist, wie ein Gemisch von CO und CO₂.

12. Verfahren nach einem der Ansprüche 7 bis 11, **dadurch gekennzeichnet, dass** die Reduktion in einem Rotationsofen oder einem Fließbett durchgeführt wird.

## Revendications

1. Procédé de préparation d'un gâteau de sulfate solide utilisable dans la préparation de dioxyde de titane, **caractérisé en ce qu'**on réduit thermiquement à l'état solide une charge de départ titanifère qui contient du fer trivalent à une température dans la gamme allant de 700 à 1 000°C, le temps de traitement à la température de réduction étant de 20 min à 1 h, au moyen d'un gaz réducteur comprenant du monoxyde de carbone de sorte que pendant la réduction le rapport CO/CO₂ dans l'atmosphère gazeuse soit supérieur à 0,5, le fer trivalent étant réduit en fer divalent sans la formation de fer métallique, ce par quoi on obtient un matériau titanifère réduit ayant une concentration faible en fer ferrique, dans lequel le chauffage et le refroidissement de la charge de départ titanifère se produit dans une atmosphère réductrice, et le matériau titanifère réduit est mis à réagir avec l'acide sulfurique pour former un gâteau de sulfate solide.

2. Procédé selon la revendication 1, **caractérisé en ce que** la charge de départ titanifère qui contient du fer trivalent est l'ilménite.

3. Procédé selon la revendication 1 ou 2, **caractérisé en ce que** l'énergie et le gaz réducteur nécessaires pour le procédé de réduction sont obtenus en brûlant un carburant contenant du carbone et/ou de l'hydrogène dans des conditions pauvres en air.

4. Procédé selon la revendication 3, **caractérisé en ce que** le carburant utilisé est constitué d'hydrocarbures gazeux ou liquides, tels que le propane, butane, le gaz naturel ou le pétrole, ou de carburants fossiles solides tels que le charbon ou la tourbe.

5. Procédé selon la revendication 1 ou 2, **caractérisé en ce que** la source d'énergie et de gaz réducteur utilisée dans le procédé de réduction est un mélange de gaz réducteur préparé séparément, tel qu'un mélange de CO et CO₂.

6. Procédé selon l'une quelconque des revendications précédentes, **caractérisé en ce que** la réduction est réalisée dans un four rotatif ou dans un lit fluidisé.

7. Procédé pour la préparation de dioxyde de titane par le procédé au sulfate à partir d'une charge de base titanifère qui contient du fer trivalent, le procédé comprenant les étapes suivantes :
a) le matériau titanifère est mis à réagir avec l'acide sulfurique pour former un gâteau de sulfate solide,
b) ledit gâteau de sulfate est lixivié pour former une solution de traitement,
c) le dioxyde de titane hydraté est précipité de la solution de traitement, et
d) on continue à traiter le dioxyde de titane hydraté pour former le dioxyde de titane,
**caractérisé en ce que** le procédé comprend une étape qui est réalisée avant l'étape a) et dans laquelle on réduit thermiquement la charge de départ titanifère qui contient du fer trivalent à l'état solide à une température dans la gamme allant de 700 à 1 000°C, le temps de traitement à la température de réduction étant de 20 min à 1 h, au moyen d'un gaz réducteur comprenant du monoxyde de carbone de sorte que pendant la réduction le rapport CO/CO₂ dans l'atmosphère gazeuse soit supérieur à 0,5, le fer trivalent étant réduit en fer bivalent sans la formation de fer métallique, ce par quoi on obtient un matériau titanifère réduit ayant une concentration faible en fer ferrique, et dans lequel le chauffage et le refroidissement de la charge de départ titanifère se produit dans une atmosphère réductrice.

8. Procédé selon la revendication 7, **caractérisé en ce que** la charge de départ titanifère qui contient du fer trivalent est l'ilménite.

9. Procédé selon la revendication 7 ou 8, **caractérisé en ce que** l'énergie et le gaz réducteur nécessaires pour le procédé de réduction sont obtenus en brûlant un carburant contenant du carbone et/ou de l'hydrogène dans des conditions pauvres en air.

10. Procédé selon la revendication 9, **caractérisé en ce que** le carburant utilisé est constitué d'hydrocarbures gazeux ou liquides, tels que le propane, butane, le gaz naturel ou le pétrole, ou de carburants fossiles solides tels que le charbon ou la tourbe.

11. Procédé selon la revendication 7 ou 8, **caractérisé en ce que** la source d'énergie et de gaz réducteur utilisée dans le procédé de réduction est un mélange de gaz réducteur préparé séparément, tel qu'un mélange de CO et CO₂.

12. Procédé selon l'une quelconque des revendications 7 à 11, **caractérisé en ce que** la réduction est réalisée dans un four rotatif ou dans un lit fluidisé.
